## Europäisches Patentamt

## European Patent Office

## Office européen des brevets

(19)

(11) Veröffentlichungsnummer: **0 133 928**

**B1**

(12)

# EUROPÄISCHE PATENTSCHRIFT

(45) Veröffentlichungstag der Patentschrift:
**04.11.87**

(51) Int. Cl.⁴: **F 16 J 15/32**

(21) Anmeldenummer: **84108108.6**

(22) Anmeldetag: **11.07.84**

(54) **Radialwellendichtring.**

(30) Priorität: **28.07.83 DE 3327229**

(43) Veröffentlichungstag der Anmeldung:
**13.03.85 Patentblatt 85/11**

(45) Bekanntmachung des Hinweises auf die Patenterteilung:
**04.11.87 Patentblatt 87/45**

(84) Benannte Vertragsstaaten:
**AT DE FR GB IT SE**

(56) Entgegenhaltungen:
**CH-A-201 408**
**DE-B-1 039 325**
**US-A-2 415 887**

(73) Patentinhaber: **Elring Dichtungswerke GmbH,
Höhenstrasse 24, D-7012 Fellbach (DE)**

(72) Erfinder: **Schumacher, Walter, Dipl.- Ing.,
Camberley- Strasse 3, D-7120 Bietigheim-
Bissingen (DE)**
Erfinder: **Schmid, Helmut, Breslauer Strasse 122,
D-7120 Bietigheim (DE)**
Erfinder: **Brandt, Hans- Joachim, Dipl.- Ing.,
Hülbeweg 16, D-7141 Schwieberdingen (DE)**

(74) Vertreter: **Hoeger, Stellrecht & Partner,
Uhlandstrasse 14c, D-7000 Stuttgart 1 (DE)**

LIBER, STOCKHOLM 1987

## Beschreibung

Die Erfindung betrifft einen Radialwellendichtring mit einem ring- oder hülsenförmigen Trägergehäuse und mindestens zwei kreisringscheibenförmigen, jeweils einen Halte- und einen Dichtlippenteil aufweisenden PTFE-Manschetten, deren einander benachbarte Halteteile am Trägergehäuse befestigt sind, wobei der Dichtlippenteil einer ersten der beiden Manschetten eine erste, dem abzudichtenden Medium zuzukehrende sowie eine zweite, im eingebauten Zustand konvexe Seite mit mindestens einer radial inneren Dichtlippenkante und einer um die Dichtringachse umlaufenden Kerbe aufweist.

PTFE hat sich als ausserordentlich geeignetes Material für die Herstellung der Manschetten von Radialwellendichtringen erwiesen, u.a. wegen seiner Verschleissfestigkeit und seinem guten Abdichtvermögen bei hohen Temperaturen, hohen Drehzahlen und gegenüber aggressiven Medien. Der Innendurchmesser der Manschette wird so bemessen, daß der Dichtlippenteil in eingebautem Zustand, d.h. wenn er die abzudichtende Welle umgibt, einen bogenförmigen Querschnitt aufweist, wobei der Dichtlippenteil in Richtung auf das abzudichtende Medium zeigt. Der verhältnismässig steife Werkstoff PTFE bringt jedoch bei derartigen Radialwellendichtringen den Nachteil mit sich, daß infolge der verhältnismässig hohen radialen Anpresskräfte zwischen Dichtlippenteil und Welle an letzterer ein verhältnismässig hohes Reibmoment entsteht, d.h. ein auf die Welle wirkendes Bremsmoment.

Diesen Nachteil weisen auch bekannte Radialwellendichtringe der eingangs erwähnten Art auf (DE-A-32 33 573), deren erste Manschette gegen sich auf deren konkaver Seite befindliches Öl abdichtet und deren zweite, von der ersten wegweisende Manschette mit ihrem Dichtlippenteil eine Schutzlippe bildet, um Beschädigungen des Dichtlippenteils der ersten Manschette durch Schmutz und dergleichen zu verhindern. Bei der auf der konvexen Seite der ersten Manschette liegenden Kerbe handelt es sich um eine gewindegangartige, um die Dichtringachse umlaufende Rückfördernut, welche dem Zweck dient, unter der inneren Dichtlippenkante hindurchgetretenes Öl auf die konkave Seite der Manschette zurückzufördern. Das Trägergehäuse dieser bekannten Radialwellendichtringe besitzt einen im wesentlichen L-förmigen Querschnitt mit einem Innenflansch, gegen dessen Innenseite eine elastomere, kreisringförmige Dichtscheibe anliegt, und die Halteteile der beiden Manschetten sind zwischen dieser Dichtscheibe und einem im Querschnitt ebenfalls L-förmigen Klemmring eingespannt welcher in das Trägergehäuse eingepresst und durch Umbördeln des ihm benachbarten Trägergehäuserands gesichert wird. Zusätzlich zu dem Nachteil hoher radialer Anpresskräfte weisen diese bekannten Radialwellendichtringe aber noch eine Reihe anderer Nachteile auf:

Gerade wegen der Steifigkeit von PTFE-Manschetten sollten diese im Trägergehäuse exakt zentriert sein; da es sich bei dem letzteren stets um ein gezogenes Blechteil handelt, besteht die Gefahr, daß die eine Manschette beim Einpressen des Klemmrings in den Bereich des Ziehradius am Übergang zwischen Umfangsteil und Flansch des Trägergehäuses gerät und dann die Öffnungen der beiden Manschetten nicht mehr konzentrisch zueinander und konzentrisch zum Aussenumfang des Trägergehäuses sind. Schliesslich kann bei diesen bekannten Radialwellendichtringen nicht ausgeschlossen werden, daß Öl zwischen den beiden gegeneinander anliegenden Halteteilen hindurch nach aussen gelangt.

Der Erfindung lag die Aufgabe zugrunde, diese bekannten Radialwellendichtringe mit zwei gegen verschiedene Medien (z. B. Öl und Luft) abdichtenden PTFE-Manschetten so zu verbessern, daß sich eine verringerte radiale Anpresskraft zumindest an der einen Manschette ergibt und dennoch Leckverluste des durch diese Manschette abgedichteten Mediums zuverlässig verhindert werden.

Ausgehend von einem Radialwellendichtring der eingangs erwähnten Art lässt sich diese Aufgabe erfindungsgemäss dadurch lösen, daß die Halteteile der beiden Manschetten einstückig miteinander sind und daß zur Erhöhung der Flexibilität des Dichtlippenteils der ersten Manschette dieser zwischen der inneren Dichtlippenkante und dem Halteteil eine kreisförmige, in sich geschlossene, um die Dichtringachse umlaufende Nut oder andere Schwächungsstelle aufweist. Eine solche Nut, Stufe oder dgl., die sich auf einer Drehmaschine problemlos herstellen lässt, vermindert ganz erheblich diejenigen Biegekräfte, die erforderlich sind, um den Dichtlippenteil so auszulenken, daß er den bogenförmigen Verlauf aufweist, den er im eingebauten Zustand besitzt, was wiederum eine Verminderung der radialen Anpresskräfte zwischen Dichtlippenteil und Welle zur Folge hat. Dies ist bei einer gewindegangartigen Kerbe, wie sie der eine Dichtlippenteil der geschilderten bekannten Radialwellendichtringe besitzt, nicht der Fall, da infolge des gewindegangförmigen Verlaufs keine kreisringförmige Schwächungsstelle entsteht, um die der radial innere Bereich des Dichtlippenteils sozusagen schwenken kann. Durch die Verringerung der radialen Anpresskräfte vermindert sich auch der Verschleiss der Dichtlippenkante, so daß die Erfindung zu einer Erhöhung der Standzeit der in Rede stehenden Radialwellendichtringe führt.

Zur weiteren Verbesserung der Flexibilität des in Rede stehenden Dichtlippenteils sowie zur Erzeugung mehrerer, gegen die Welle anliegender Dichtlippenkanten wird ferner empfohlen, den Radialwellendichtring so auszubilden, daß der Dichtlippenteil der ersten Manschette durch von dessen zweiter Seite ausgehende, in sich geschlossene und zur Dichtringachse konzentrische Einschnitte teilweise gespalten ist. Dadurch werden mehrere Dichtlippenkanten unter Beibehaltung des Vorteils geschaffen, dass der Radialwellendichtring bei jeder Drehrichtung zur Abdichtung in der Lage ist, was auf Manschetten nicht zutrifft, welche eine gewindegangartige Rückfördernut aufweisen. In sich geschlossene und zur Dichtringachse konzentrische Einschnitte sind bei Gummimanschetten an sich bekannt (Fig. 3 und 4 der CH-A-201 408 sowie Fig. 2 der US-A-2 415 887), jedoch verlaufen sie stets vom radial inneren Rand der Manschette aus in radialer Richtung in diese hinein, um so mehrere Teilmanschetten zu schaffen, während die Erfindung vorsieht, durch von einer Seitenfläche der Manschette ausgehende Einschnitte an einer einzigen Dichtlippe mehrere Dichtlippenkanten zu schaffen.

Normalerweise wird der Dichtlippenteil der zweiten Manschette wie bei den vorstehend geschilderten bekannten Radialwellendichtringen von der ersten Manschette wegweisen. Es kann aber auch vorteilhaft sein, den Radialwellendichtring so auszubilden, daß der Dichtlippenteil der zweiten Manschette im eingebauten Zustand eine konkave, der konvexen Seite des anderen Dichtlippenteils zugekehrte Seite aufweist, d.h. daß die beiden Dichtlippenteile in dieselbe Richtung weisen. Ein solcher Radialwellendichtring lässt sich in Sonderfällen leichter montieren, und er baut inaxialer Richtung kompakter als die geschilderten bekannten Radialwellendichtringe.

Erwähnenswert ist noch, dass infolge der erfindungsgemäss vorgesehenen, durch die Nut gebildeten Schwächungsstelle die vorstehend erwähnten Einschnitte auch eine Rückfördernut bilden können. Schliesslich sei noch darauf hingewiesen, daß bei dem erfindungsgemässen Radialwellendichtring auch das unter Druck beobachtete Kaltfliessen des PTFE der beiden Manschetten nicht zu Undichtigkeiten zwischen den Halteteilen der beiden Manschetten führen kann, wie dies bei den vorstehend geschilderten bekannten Radialwellendichtringen trotz der Verwendung einer elastomeren Dichtscheibe zwischen dem Innenflansch des Trägergehäuses und den Manschetten deshalb der Fall sein kann, weil die elastomere Dichtscheibe nach und nach nicht mehr in der Lage ist, das Kaltfliessen der Halteteile der beiden Manschetten zu kompensieren.

Weitere Merkmale, Vorteile und Einzelheiten der Erfindung ergeben sich aus den beigefügten Ansprüchen und/oder aus der nachfolgenden Beschreibung sowie der beigefügten zeichnerischen Darstellung einiger besonders vorteilhafter Ausführungsformen des erfindungsgemässen Radialwellendichtrings; in der Zeichnung zeigen:

Figur 1 einen Axialschnitt durch eine erste Ausführungsform, und zwar im auf die abzudichtende Welle aufgeschobenen Zustand;

Figuren 2a bis 2d die verschiedenen Schritte der Herstellung der PTFE-Manschette und der PTFE-Schutzmanschette des in Figur 1 gezeigten Radialwellendichtrings aus einem Stück;

Figur 3 eine der Figur 1 entsprechende Darstellung einer zweiten Ausführungsform, wobei jedoch der eingebaute Zustand nur strichpunktiert angedeutet wurde, und

Figur 4 eine der Figur 1 entsprechende Darstellung einer dritten Ausführungsform.

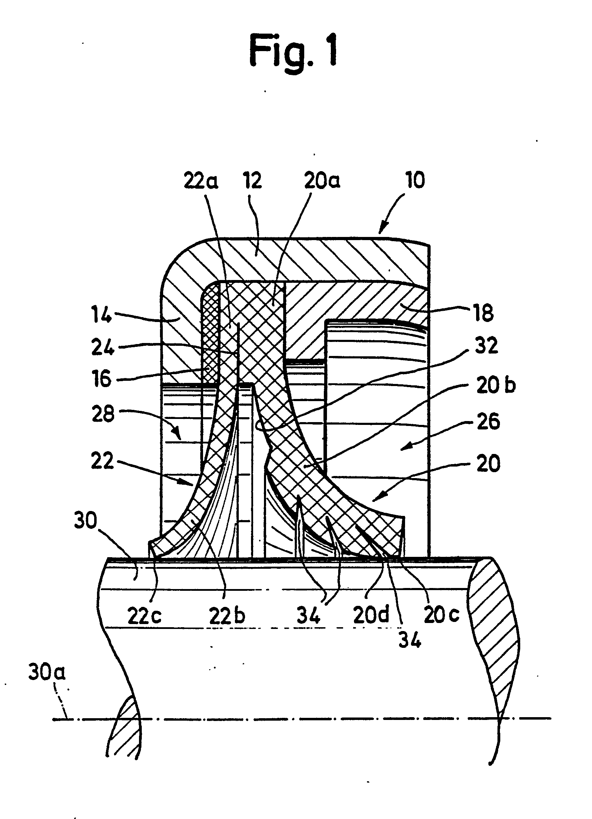

Die Figur 1 zeigt ein als Blechziehteil ausgebildetes Trägergehäuse 10, bestehend aus einem Umfangsteil 12 und einem Innenflansch 14, gegen den eine elastomere Dichtscheibe 16 anliegt. Mit Hilfe eines ebenfalls einen ungefähr L-förmigen Querschnitt aufweisenden und in das Trägergehäuse 10 eingepressten Klemmrings 18 sind zwischen diesem und der Dichtscheibe 16 die beiden Halteteile 20a und 22a einer ersten und einer zweiten Manschette 20 bzw. 22 eingespannt, wobei zur axialen Sicherung des Klemmrings 18 dieser und der gemäss Figur 1 rechte Rand des Umfangsteils 12 durch ein Bördelwerkzeug oder dergleichen etwas nach innen umgebogen ist. Die beiden Manschetten 20 und 22 bestehen aus einem einzigen PTFE-Teil, welches durch einen sich in radialer Richtung von innen nach aussen erstreckenden Einschnitt 24 in die beiden im Aussenumfangsbereich des PTFE-Teils noch zusammenhängenden Manschetten unterteilt worden ist. Die erste Manschette 20 besitzt einen einen Ölraum 26 begrenzenden Dichtlippenteil 20b, die zweite Manschette 22 einen einen Luftraum 28 begrenzenden Dichtlippenteil 22b, welche beide voneinander wegweisen und eine äussere konkave sowie eine innere konvexe Seite besitzen, wenn der Radialwellendichtring auf einer Welle 30 montiert ist.

Zur Erhöhung der Flexibilität des Dichtlippenteils 20b der ersten Manschette 20 besitzt diese auf ihrer konvexen, inneren Seite eine zur Wellenachse 30a bzw. zum Trägergehäuse 10 konzentrische, in sich geschlossene, kreisringförmige Nut 32 sowie mehrere Einschnitte 34, welche ebenfalls in sich geschlossen, kreisringförmig und zur Wellenachse 30a konzentrisch sind. Die beiden in radialer Richtung innersten Einschnitte 34 sind ausserdem so gestaltet und angeordnet, daß der Dichtlippenteil 20b der ersten Manschette 20 zwei gegen die Welle 30 anliegende Dichtlippenkanten 20c und 20d bildet. Hingegen weist der zweite Dichtlippenteil 22b nur eine einzige Dichtlippenkante 22c auf, nachdem die Manschette 22 nur eine Schutzlippe bilden soll, welche den Dichtlippenteil 20b vor von aussen anfallendem Schmutz schützt.

Selbstverständlich sind die Innendurchmesser der beiden Manschetten 20 und 22 so bemessen, daß sie vor dem Aufschieben des Radialwellendichtrings auf die Welle 30 kleiner sind als der Wellendurchmesser, um so sicherzustellen, daß sich mit den Dichtlippenteilen 20b und 22b eine gute Abdichtung am Wellenumfang ergibt.

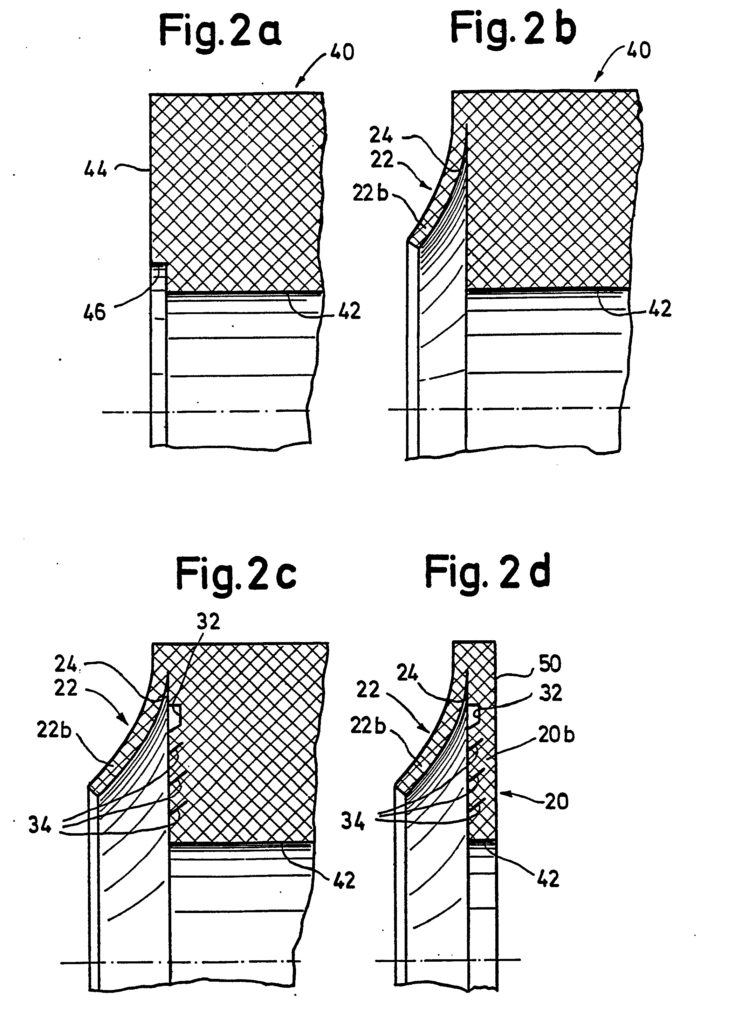

Anhand der Figuren 2a bis 2d soll nun die Herstellung der über ihre Halteteile einstückig miteinander verbundenen Manschetten 20 und 22 erläutert werden.

Es wird von PTFE-Stangenmaterial 40 mit einer Bohrung 42 und plangedrehter Stirnseite 44 ausgegangen. Dann wird auf einer Drehmaschine zunächst eine Stufe 46 angedreht, wenn im unverformten Zustand der Innendurchmesser der zweiten Manschette 22 grösser ist als derjenige der ersten Manschette 20. Anschliessend erzeugt man durch spanloses Einstechen den Einschnitt 24, worauf der Dichtlippenteil 22b abgespreizt wird, um die Nut 32 und die Einschnitte 34 herstellen zu können. Schliesslich werden die beiden zusammenhängenden Manschetten von der Stange abgestochen, wobei gleichzeitig die andere Stirnseite 50 und die Stirnseite 44 des nächsten, herzustellenden PTFE-Teils entstehen.

Die spanlos hergestellten Einschnitte 34 haben zunächst, d.h. im noch unverformten Zustand der beiden Manschetten, lediglich die Gestalt einer Fuge oder eines Schnitts und verlaufen vorzugsweise unter 45°.

Der Innenflansch 14, die Dichtscheibe 16 und der Halteteil 22a können miteinander verklebt sein, wobei mit dem Klemmring 18 während des Abbindens bzw. Aushärtens des verwendeten Klebers der erforderliche Anpressdruck aufrechterhalten wird.

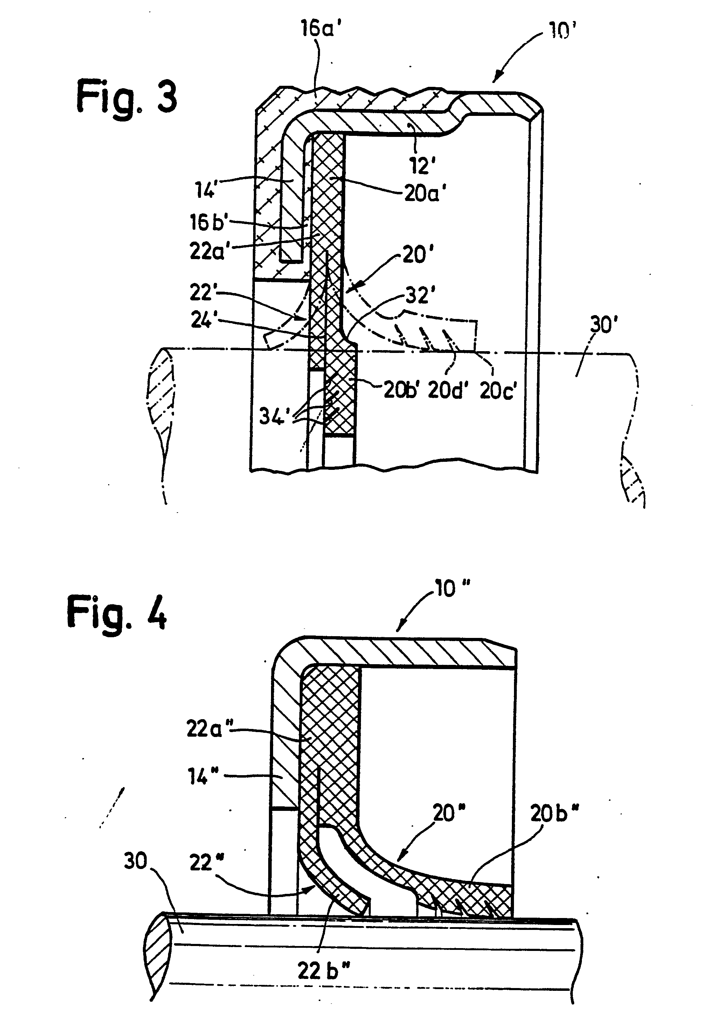

Die in Figur 3 gezeigte Ausführungsform soll nur insoweit beschrieben werden, als sie von der in Figur 1 gezeigten Ausführungsform abweicht. Für einander entsprechende Elemente der beiden Ausführungsformen wurden dieselben Bezugszeichen verwendet, jedoch unter Hinzufügung eines Strichs für die Ausführungsform gemäss Figur 3. Bei dieser Ausführungsform weist der Umfangsteil 12' des Trägergehäuses 10' eine Schulter auf und ist mit einem Elastomer umspritzt, welches aussen einen der Abdichtung dienenden Mantel 16a' und innen eine Dichtscheibe 16b' bildet. Die letztere kann dazu dienen, den Halteteil 22a' der zweiten Manschette 22' an den Innenflansch 14' des Trägergehäuses 10' anzuvulkanisieren. Bei der in Figur 3 gezeigten Ausführungsform tritt an die Stelle der innen liegenden Nut 32 der Ausführungsform nach Figur 1 eine aussen liegende Nut oder Schulter 32', so daß auch bei dieser Ausführungsform die Wandstärke der innen liegenden Manschette 20 zwischen demjenigen Bereich ihres Dichtlippenteils 20b', der die Dichtlippenkanten 20c' und 20d' bildet, und dem Halteteil 20a' vermindert ist, so daß eine Schwächungsstelle entsteht, um die die radial innersten Bereiche des Dichtlippenteils 20b' wie um ein Scharnier schwenken können.

Der in Figur 4 gezeigte Radialwellendichtring unterscheidet sich von demjenigen nach Figur 1 nur durch zwei Merkmale: Der Dichtlippenteil 22b'' der äusseren Manschette 22'' weist in dieselbe Richtung wie der Dichtlippenteil 20b'' der inneren Manschette 20'', und der Halteteil 22a'' der äusseren Manschette ist unmittelbar an den Innenflansch 14'' des Trägergehäuses 10'' angeklebt.

**Patentansprüche**

1. Radialwellendichtring mit einem ring- oder hülsenförmigen Trägergehäuse (10) und mindestens zwei kreisringscheibenförmigen, jeweils einen Halte- und einen Dichtlippenteil (20a, 22a bzw. 20b, 22b) aufweisenden PTFE-Manschetten (20, 22), deren einander benachbarte Halteteile (20a, 22a) am Trägergehäuse (10) befestigt sind, wobei der Dichtlippenteil (20b) einer ersten der beiden Manschetten eine erste, dem abzudichtenden Medium zuzukehrende sowie eine zweite, im eingebauten Zustand konvexe Seite mit mindestens einer radial inneren Dichtlippenkante (20c) und einer um die Dichtringachse umlaufenden Kerbe (34) aufweist, dadurch gekennzeichnet, daß die Halteteile (20a, 22a) der beiden Manschetten (20, 22) einstückig miteinander sind und daß zur Erhöhung der Flexibilität des Dichtlippenteils (20b) der ersten Manschette (20) dieser zwischen der inneren Dichtlippenkante (20c) und dem Halteteil (20a) einenkreisförmigen, in sich geschlossenen, um die Dichtringachse umlaufenden Schwächungsbereich (32) aufweist, in dem die Wandstärke des Dichtlippenteils (20b) kleiner als dessen mittlere Wandstärke in den radial weiter innen liegenden Bereichen des Dichtlippenteils ist.

2. Radialwellendichtring nach Anspruch 1, dadurch gekennzeichnet, daß der Schwächungsbereich (32) konzentrisch zur Dichtringachse ist.

3. Radialwellendichtring nach Anspruch 1 oder 2, dadurch gekennzeichnet, daß der Schwächungsbereich (32) auf der ersten Seite der ersten Manschette (20) vorgesehen ist.

4. Radialwellendichtring nach einem der Ansprüche 1 bis 3, dadurch gekennzeichnet, daß der Schwächungsbereich (32) als Nut aus gebildet ist.

5. Radialwellendichtring nach einem oder mehreren der Ansprüche 1 bis 4, dadurch gekennzeichnet, daß der Dichtlippenteil (20b) der ersten Manschette (20) durch von dessen zweiter Seite ausgehende, in sich geschlossene, zur Dichtringachse konzentrische Einschnitte (34) teilweise gespalten ist.

6. Radialwellendichtring nach Anspruch 5, dadurch gekennzeichnet, daß die Einschnitte (34) so angeordnet und gestaltet sind, daß der Dichtlippenteil (20b) der ersten Manschette (20) im eingebauten Zustand mehrere Dichtlippenkanten (20c, 20d) bildet.

7. Radialwellendichtring nach Anspruch 5 oder 6, dadurch gekennzeichnet, daß sich die Einschnitte (34) bei flachgedrücktem Dichtlippenteil (20b) - bezogen auf die radiale Richtung - schräg nach aussen in das Manschettenmaterial hineinerstrecken.

8. Radialwellendichtring nach einem oder mehreren der Ansprüche 1 bis 7, dadurch gekennzeichnet, daß der Dichtlippenteil (22b'') der zweiten Manschette (22'') im eingebauten Zustand eine konkave, der konvexen Seite des anderen Dichtlippenteils (20b'') zugekehrte Seite aufweist.

## Claims

1. A rotary shaft seal with an annular or sleeve-shaped carrier housing (10) and at least two PTFE sleeves (20, 22) shaped as annular discs and each comprising a holding part and a sealing lip part (20a, 22a and 20b, 22b respectively), the sleeves (20, 22) having adjacent holding parts (20a, 22a) secured to the carrier housing (10), the sealing lip part (20b) of a first of the two sleeves having a first side facing the medium to be sealed off and a second side convex in the inserted state and having at least one radial inner sealing lip edge (20c) and a circumferential notch (34) around the axis of the seal, characterized in that the holding parts (20a. 22a) of the two sleeves (20, 22) are integral with one another, and, in order to increase the flexibility of the sealing lip part (20b) of the first sleeve (20), between the inner sealing lip edge (20c) and the holding part (20a) the said sealing lip part (20b) comprises a continuous annular circumferential area of weakening (32) passing around the axis of the seal, the wall thickness of the sealing lip part (20b) being less than the average wall thickness thereof in the areas of the sealing lip part lying radially further inwards.

2. A rotary shaft seal according to Claim 1, characterized in that the area of weakening (32) is concentric with the axis of the seal.

3. A rotary shaft seal according to Claim 1 or 2, characterized in that the area of weakening (32) is provided on the first side of the first sleeve (20).

4. A rotary shaft seal according to one or more of Claims 1 to 3, characterized in that the area of weakening (32) is formed as a groove.

5. A rotary shaft seal according to one or more of Claims 1 to 4, characterized in that the sealing lip part (20b) of the first sleeve (20) is partly divided by continuous cuts (34) starting from the second side of the said sealing lip part (20b) and being concentric with the axis of the seal.

6. A rotary shaft seal according to Claim 5, characterized in that the cuts (34) are arranged and formed in such a way that, in use, the sealing lip part (20b) of the first sleeve (20) forms a plurality of sealing lip edges (20c, 20d).

7. A rotary shaft seal according to Claim 5 or 6, characterized in that when the sealing lip part (20b) is pressed flat with respect to the radial direction, the cuts (34) extend obliquely outwards into the material of the sleeve.

8. A rotary shaft seal according to one or more of Claims 1 to 7, characterized in that, in use, the sealing lip part (22b'') of the second sleeve (22'') has a concave side facing the convex side of the other sealing lip part (20b'').

## Revendications

1. Bague d'étanchéité radiale pour arbre comprenant un boîtier support (10) en forme de bague ou de douille et au moins deux garnitures en PTFE (20, 22) en forme de rondelles en couronne de cercle, qui présentent chacune une partie d'ancrage et une partie lèvre d'étanchéité (20a, 22a et 20b, 22b), et dont les parties d'ancrage adjacentes l'une à l'autre (20a, 22a) sont fixées au boîtier support (10), tandis que la partie lèvre d'étanchéité (20b) d'une première des deux garnitures présente une première face, qui doit être dirigée vers le fluide à retenir à joint étanche, ainsi qu'une deuxième face, qui est convexe dans l'état de montage, et qui présente au moins une arête de lèvre d'étanchéité radialement intérieure (20c) et une entaille (34) qui entoure l'axe de la bague d'étanchéité, caractérisée en ce que les parties d'ancrage (20a, 22a) des deux garnitures (20, 22) sont d'une seule pièce entre elles et en ce que, pour améliorer la flexibilité de la partie lèvre d'étanchéité (20b) de la première garniture (20), cette partie présente, entre l'arête de lèvre d'étanchéité intérieure (20c) et la partie d'ancrage (20a), une région d'affaiblissement circulaire (32), refermée sur elle-même, qui entoure l'axe de la bague d'étanchéité et dans laquelle l'épaisseur de paroi de la partie lèvre d'étanchéité (20b) est plus petite que l'épaisseur de paroi moyenne de cette partie dans les régions de la partie lèvre d'étanchéité qui se trouvent radialement plus loin vers l'intérieur.

2. Bague d'étanchéité radiale pour arbre selon la revendication 1, caractérisée en ce que la région d'affaiblissement (32) est concentrique à l'axe de la bague d'étanchéité.

3. Bague d'étanchéité radiale pour arbre selon la revendication 1 ou la revendication 2, caractérisée en ce que la région d'affaiblissement (32) est prévue sur une première face de la première garniture (20).

4. Bague d'étanchéité radiale pour arbre selon une des revendications 1 à 3, caractérisée en ce que la région d'affaiblissement (32) est réalisée sous la forme d'une gorge.

5. Bague d'étanchéité radiale pour arbre selon une ou plusieurs des revendications 1 à 4, caractérisée en ce que la partie lèvre d'étanchéité (20b) de la première garniture (20) est fendue partiellement, par des entailles (34) qui partent de sa deuxième face, qui sont refermées sur elles-mêmes et concentriques à l'axe de la bague d'étanchéité.

6. Bague d'étanchéité radiale pour arbre selon la revendication 5, caractérisée en ce que les entailles (34) présentent une disposition et une configuration telles que, dans l'état de montage, la partie lèvre d'étanchéité (20b) de la première garniture (20) forme plusieurs arêtes de lèvre d'étanchéité (20c, 20d).

7. Bague d'étanchéité radiale pour arbre selon l'une des revendications 5 et 6, caractérisée en ce que, lorsque la partie lèvre d'étanchéité (20b) est aplatie dans une direction radiale, les entailles (34) pénètrent obliquement vers l'intérieur dans la matière de la garniture.

8. Bague d'étanchéité radiale pour arbre selon une ou plusieurs des revendications 1 à 7, caractérisée en ce que la partie lèvre d'étanchéité (22b'') de la deuxième garniture (22'') présente, dans l'état de montage, une face concave qui est dirigée vers la face convexe de l'autre partie lèvre d'étanchéité (20b'').

# Fig. 1

# Fig. 2 a

# Fig. 2 b

# Fig. 2 c

# Fig. 2 d

Fig. 3

Fig. 4